Europäisches Patentamt

(19) European Patent Office

Office européen des brevets

(11) Publication number: **0 009 291**

**B1**

(12) **EUROPEAN PATENT SPECIFICATION**

(45) Date of publication of patent specification: **27.10.82**

(51) Int. Cl.³: **G 06 K 15/02, B 41 J 19/30**

(21) Application number: **79200520.9**

(22) Date of filing: **18.09.79**

(54) **A device for indicating the position of a printer carriage.**

(30) Priority: **20.09.78 SE 7809895**
**29.08.79 SE 7907196**

(43) Date of publication of application:
**02.04.80 Bulletin 80/7**

(45) Publication of the grant of the patent:
**27.10.82 Bulletin 82/43**

(84) Designated Contracting States:
**DE FR GB IT SE**

(56) References cited:
**DD - A - 100 207**
**US - A - 3 539 895**
**US - A - 3 942 619**
**US - A - 4 044 882**
**F. Dokter, J. Steinhammer, Digitale Elektronik in der Messtechnik und Datenverarbeitung Band II, 4 Auflage, 1975, Hamburg, S 48—51**

**Zeitschrift Elektroniker Nr. 8/1978, EL 32—34**

(73) Proprietor: **Svenska Philipsföretagen AB**
**Patent**
**S-11584 Stockholm (SE)**
(84) **SE**
(73) Proprietor: **N.V. Philips' Gloeilampenfabrieken**
**Groenewoudseweg 1**
**NL-5621 BA Eindhoven (NL)**
(84) **DE FR GB IT**

(72) Inventor: **Thern, Rolf Ake Birger**
**c/o INT. OCTROOIBUREAU B.V. 6, Prof. Holstlaan**
**NL-5656 AA Eindhoven (NL)**
Inventor: **Dahlberg, Peter**
**c/o INT. OCTROOIBUREAU B.V. 6, Prof. Holstlaan**
**NL-5656 AA Eindhoven (NL)**

(74) Representative: **Cuppens, Hubertus Martinus Maria et al,**
**INTERNATIONAAL OCTROOIBUREAU B.V. Prof. Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## A device for indicating the position of a printer carriage

The invention is directed to a device for indicating the position of a printer carriage by means of a so called Meander-indicator, said carriage being movable by means of a direct current motor at a speed which corresponds to a digital speed reference signal supplied by a microprocessor to the motor via a D/A-converter and a drive unit. The invention is also directed to a use of said device for controlling the speed of the carraige by a variation of said speed reference signal.

From F. Dr. J. Steinhamer, Digitale Elektronik in der Messtechnik und Datenverarbeitung, Band II, 4. Auflage 1975, Hamburg, pages 48—51 the general principles of speed control of a direct current motor by means of a digital tachometer the output pulses of which are processed by a digital circuit are known. From Zeitschrift Elektroniker Nr 8/1978, EL 32—34 it is also known to use a micro processor for processing pulses in this respect. Further, it is known from US patent specification 3 539 895 to use a so called resolver for controlling the instantaneous positions and velocities of movable elements. From a principle point of view this resolver works like the Meander-indicator used in the device according to the invention.

However, no one of said references is directed to control of the carriage movement in a printer. More specifically, the references are not concerned with the requirements with respect to speed of operation and accuracy which have to be fulfilled by a device suitable for a printer application.

One object of the invention is to obtain a position indicating device as defined in the introduction of this description which is suitable for printer applications with respect to operation speed, accuracy and implementation.

The object of invention is obtained by a device which according to the invention is characterized in that said Meander-indicator comprises one stationary element being extended along the full printing width and two further elements arranged on the carriage with a mutual displacement of 1/4 period of the loop structure of the Meander-indicator relative to the stationary element, said further elements being supplied with a sinus and a cosinus signal of same frequency by a sinus and a cosinus generator, respectively, said signals generating in the stationary Meander-element an output signal of same frequency and showing relative to the supplied sinus signal a phase deviation which is a measure of the carriage position within a period of the Meander-loop structure, and for digitalizing this phase deviation further comprising a binary counter having a cycle length of A bits, and which is advanced at a frequency equal to A times the frequency of the sinus signal and in synchronism therewith, generating thereby an output binary number of $2^A$ bits which varies stepwise from 0 to $2^A$ during each period of the Meander output signal, a latch circuit to which said output number is supplied, a converter for converting the meander output signal to a rectangular wave with frequency and phase unchanged, and a flip-flop circuit to the input of which said rectangular wave is supplied and which is clocked by the input frequency of the binary counter, and in which said latch circuit is clocked by the input signal of the flip-flop circuit, the latch circuit supplying thereby a binary representation of said phase deviation.

The inventive device has the advantage of a fully synchronized system since the sinus and cosinus signals as well as the change of state of the latch circuit are synchronized to the one and same frequency, i.e. the input frequency of the binary counter. By feeding the carriage Meander element in the manner disclosed an output signal is obtained the phase angle of which holds information about the carriage position within one period of the Meander-loop. Because of the fully synchronized system the phase lag of this output signal with respect to the input sinus signal may be directly digitalized by means of a few and simple digital circuit components. By a selection of the input frequency to the binary counter, the cycle of this counter and the period of the meander-loop structure a proper accuracy for printer applications may be obtained.

The device according to the invention may preferably be used for controlling the speed of the printer carriage so as to correspond to an optimal carriage speed which is stored in the micro processor. The features of this use are defined in claim 3. One advantage of this use is that the control of the direct current motor will work like an open loop control and thereby eliminate the risk of self oscillations. By updating the reference signal according to this use the carriage will always keep to the speed which is defined by the stored optimal value. This eliminates every need of trimming actions because of differences between different motors, long-time deviation in the drive unit and wear of the mechanical parts which are used for driving the carriage.

One embodiment of the device according to the invention will be described closer in the following with reference to the drawings, in which

Fig. 1 shows schematically the components of the device according to the invention;

Fig. 2 shows a circuit diagram of the signal processing circuit of Fig. 1; and

Fig. 3 shows a signal diagram of signals appearing at different points in Fig. 2.

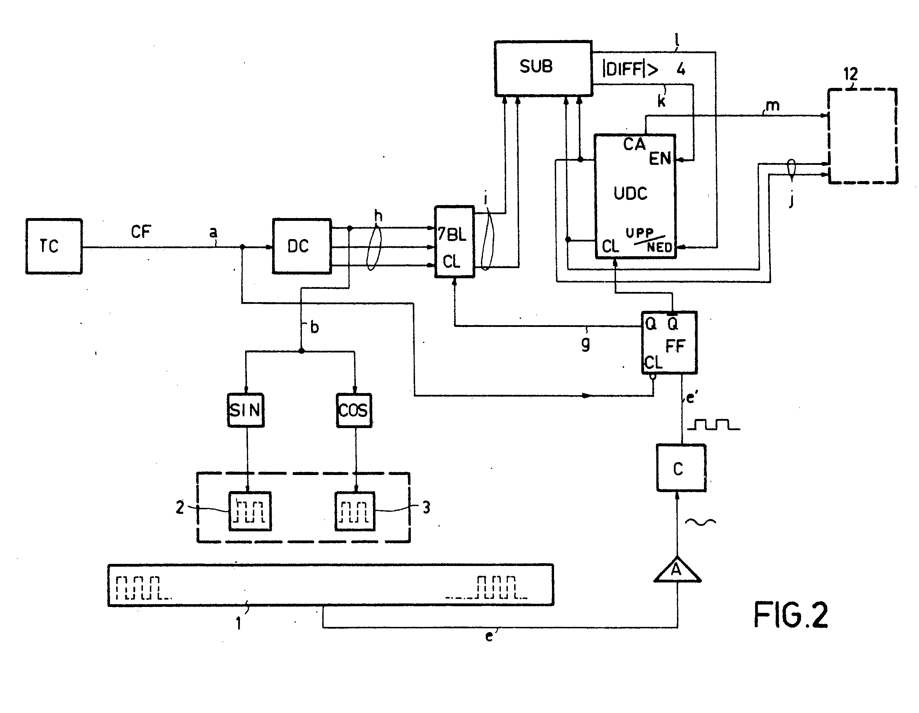

For detecting the carriage position this embodiment uses a so-called Meander-indicator comprising a stationary Meander-element 1 arranged in the printer and being extended in the direction of movement of the carriage along the printing width of the printer. On said carriage two further Meander-elements 2, 3 are arranged, the elements 2 and 3 being arranged so as to obtain a physical displacement of the belonging Meander-structures which is equal to 1/4 period of Meander-structure (corresponding to an electrical phase deviation of 90°) with respect to the Meander-structure provided on said stationary indicator element 1. The distance between the indicator element 1 and the indicator element 2, 3 is so selected that a good inductive coupling is obtained between the stationary element and the movable elements. To the movable elements 2, 3 are supplied, by the signal processing circuit 4, two sinus signals having a relative phase deviation of 90°. The signal, which is then induced in the stationary indicator elements 1, is supplied to said signal processing circuit 4. The operation and structure thereof will be described closer in connection with Fig. 2.

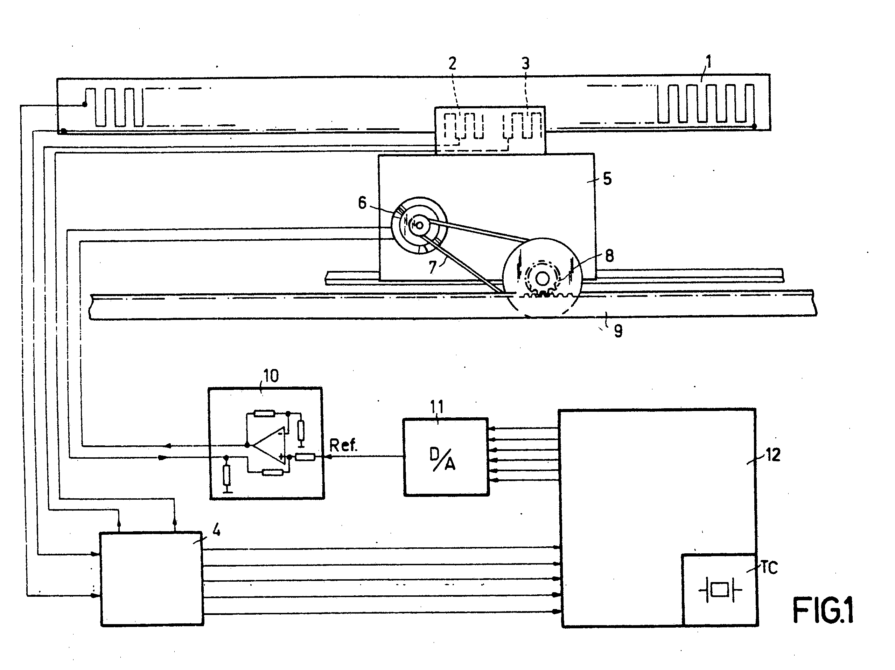

Fig. 1 discloses furthermore a schematical carriage 5 and a belonging drive motor 6, which via toothed belt 7 drives a gear wheel 8 which is engaged with a toothed belt 9, being fixed to the printer. When motor 6 is rotated the carriage is moved by means of the gear wheel 8 and the toothed belt 9.

The direct current motor is supplied by a supply voltage from a drive circuit 10, said circuit being supplied with a reference signal Ref from a digital-to-analogue converter 11, which in turn is supplied with a digital reference signal value from a microprocessor 12. Further is evident from the drawing that said microprocessor 12 is provided with a crystal controlled timing circuit TC which may be used for settling the occasions when the position of the carriage should be detected.

The use drive circuit 10 is of a type which is commonly used in tape recorders and record players. As shown within block 10 of Fig. 1 the drive circuit comprises a differential amplifier to the +input of which the Ref signal is supplied and the output of which is connected to the one pole of motor 6 and also feed-back coupled to the −input of the amplifier via a second resistor. For current sense the second pole of motor 6 is connected to earth via a third resistor and also to the +input of the amplifier via a fourth resistor.

In Fig. 2 the signal processing circuit 4 of Fig. 1 is disclosed and the indicator elements 1, 2, 3 which are connected thereto and also the crystal timing circuit TC being accommodated within the microprocessor 12 in Fig. 1.

The basic frequency of the microprocessor is 6.144 MHz and this frequency is divided by the factor of 2 so as to obtain from the timing circuit the frequency of 3.07 MHz, said frequency being designated as clock frequency CF in the following.

The clock frequency CF is supplied to a frequency divider DC comprising a counter counting down the clock frequency by the factor of 128 and thereby a signal of the approximate frequency of 24 kHz is obtained. This frequency is designated as primary frequency in the following.

Said primary frequency is supplied to a sinus current generator SIN and a cosinus current generator COS. The output signals from said generators are each supplied to a separate one of said Meander-elements 2 and 3, respectively, being designated as primary elements in the following. The primary elements are provided on a common circuit board which in turn is supported by the carriage 5.

For the period of the Meander-structure is selected the value of 3.92 mm and this period divided by 128 (approximately 0.0302 mm) is the smallest detectable change of the carriage position and is the subdistance which in a printer comprising a matrix print head, is used for obtaining the distance between two colums in the character matrix which is used for printing of characters having different character distances, e.g. 1/15, 1/12 or 1/10 inch.

The signals of the primary elements 2, 3 are supplied inductively to (the secondary) Meander-element 1. The secondary element 1 comprises a Meander-structure of the same period as elements 2, 3.

In element 1 the induced signals are added and thereby a signal of a constant amplitude is formed having a phase value in relation to the primary frequency signal which varies proportionally to the movement of the primary elements 2, 3 along the secondary element 1. The phase deviation will pass by the value of 0 (a multiple of 360°) each time when the Meander-structures of elements 1, 2, 3 reach a defined relative position, i.e. each time after 3.92 mm.

If the output signal from generators SIN and COS are E sin $\omega$t and E cos $\omega$t, respectively, the output signal e of the secondary element 1 will be as follows

$$e = E \sin \omega t \cos \beta + E \cos \omega t \sin \beta = E \sin (\omega t + \beta)$$

in which $\beta$ is the value of the phase angle which depends on the movement.

The voltage e is amplified in the amplifier A and is pulse shaped in the converter C to a rectangular wave form the frequency (the secondary frequency) of which will consequently correspond to the primary frequency (approximately 24 kHz) supplied by the frequency divider DC, and having a phase deviation ($\beta$) with respect to the primary frequency which depends on the carriage position. Now remains the conversion of this phase deviation to a digital value to be supplied to the microprocessor 12. In order to obtain the position of the carriage also the zero crossings of the phase deviation must be recorded.

For this object is used a so-called 7 bit latch circuit 7BL, a subtractor SUB and an up/down counter UDC interconnected as disclosed in Fig. 2.

The 7-bit latch circuit 7BL and the counter UDC are clocked (CL) together by the secondary frequency signal, which, however, is first passed through a flip-flop FF, which is clocked by the clock frequency CF, the latch circuit being clocked on each positive edge and being thereby latched to the current position of the frequency divider DC.

The aim of said flip-flop FF is to eliminate the hazard condition which may arise if said latch circuit or said up/down counter is clocked and the counter of the frequency divider is progressed one step simultaneously.

When the phase of the secondary frequency signal is changed the position of the latch circuit will be changed correspondingly. In order not to obtain an unstable indication due to noise and small disturbances, e.g. so that the position will vary between 0 and 127, said 7-bit up/down counter UDC has been introduced. The counter is then made to follow the latch circuit with some amount of a backlash, e.g. three units which corresponds to three of said sub-distances and equals about $8 \times 0.03 = 0.24$ mm. This is obtained by comparing the positions of the counter and latch circuit in a so-called "subber" (SUB), that it is an adder with one input signal inverted. If it follows from this comparison that that the counter has a backlash which is more than e.g. four units ($|DIFF|>4$) the same will be advanced one step on the negative edge of the secondary frequency, or also the same is stepped backwards one step if the counter is leading by activating the counter via input EN and UPP/NED.

Thereby is obtained on the output of the up/down counter a noise free digital indication of the carriage position within a period of the Meander-structure. The zero crossings of this indication, that is the crossings between the periods of the Meander-structure, are obtained by sensing the carry bit CA of the 7-bit counter UDC. Then also the direction of the zero crossing is sensed, that is if up or down counting is in question.

Both of said output signals from the up/down counter are supplied to the microprocessor 12 as an indication of the carriage position.

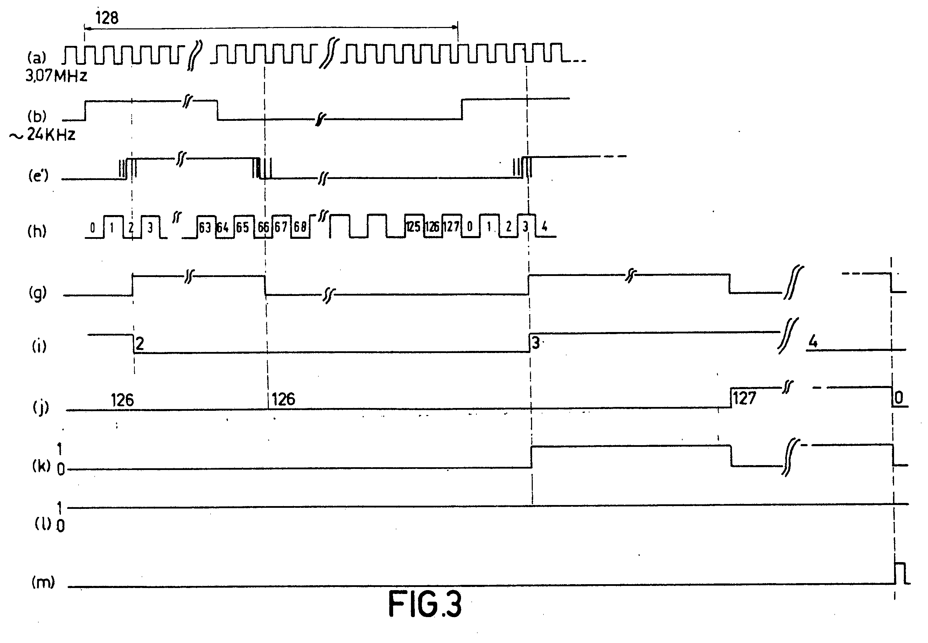

In Fig. 3 is shown a signal diagram of signals in different points of the circuit diagram in Fig. 2.

Signal *a* shows the clock frequency signal CF having the frequency of 3.07 MHz.

Signal *b* shows the so-called primary frequency signal having the approximate frequency of 24 kHz, which is obtained by counting down signal *a* with a factor of 128 in the frequency divider DC. As shown in connection with signal *a* follows therefrom that each period of the b-signal comprises 128 periods of the a-signal. Each period of the a-signal may also be said to represent the sub-distance of 0.0302 mm defined above and being the smallest detectable change of the carriage position.

From the secondary element of the Meander-indicator the above mentioned signal *e* is obtained, said signal results after being pulse shaped in the converter C in the shown signal *e'*. The harzard of the edge position of *e'* is indicated by a number of different edge positions at each transition. In the case shown the carriage has moved one sub-distance=0.0302 mm and therefore initiated a corresponding phase change of the second positive edge of said *e'*-signal.

Signal *h* from the counter in the frequency divider DC is a binary number of 7 bits assuming values between 0 and 127 in synchronism with signal *a*. The h-signal in Fig. 3 is represented by a pulse train of which each half period represents an indicated value of the h-signal. At the first and second shown positive edges of the *e'*-signal this h-signal takes the value of 2 and 3, respectively.

Signal *g* represents the *e'*-signal after having passed through the flip-flop FF. From the diagram is clear that this flip-flop is clocked on the negative edges of the a-signal.

Signal *i* represents the value of the binary number of seven bits comprised in the latch circuit 7BL. This signal is represented by a two-level signal having the signal value indicated at the transitions between said levels. From the diagram is clear that the latch circuit is clocked at the positive edges of signal *g*. Signals *h* and *g* then gives that the i-signal has the value of 2 between the shown first and second, respectively, edges of the g-signal and thereafter the values 3, 4, etc.

Signal *j* represents the value of the binary number appearing on the output of counter UDC by means of a two-level signal the values of which are indicated at the transitions.

Signals *i* and *j* are compared in circuit SUB and if this comparison results in that counter UDC has a back lash to or leads the position of the latch circuit an amount which is greater than what corresponds to four units, i.e. four periods of signal *a* ($|DIFF|>4$) the corresponding signal *k* of circuit SUB changes to a high level.

In the case shown the output signal *j* of counter UDC has initially the value of 126, while the i-signal has the value 2. Therefore the difference consists of the four values 127, 0, 1, 2, which is not greater than four units and consequently the k-signal will not change to its high level at the first appearing negative edge of *g*.

When later on the i-signal changes to the value 3 the requirement $|DIFF|>4$ is fulfilled and the belonging output signal *k* changes to the high level.

In the diagram the assumption is that the carriage is moved in the one and same direction all the time and that appearing interferences are small, and so the difference between the i-signal and the j-signal will always be positive, which is indicated by a stationary high level of the signal *l* from circuit SUB, said signal being obtained from the output of the seventh bit thereof.

By the simultaneous high levels of signals *l* and *k* the requirements for advancement of UDC is fulfilled and this occurs at the next following negative edge of the g-signal, and thereat the j-signal will assume the value of 127 and at the same time k-signal will return to the low level.

Fig. 3 also illustrates what happens at a later stage when the carriage has been moved another 0.0302 mm and as a consequence thereof the output signal *i* of the latch circuit has obtained the value of 4. Since the j-signal has the value of 127 the requirement $|DIFF|>4$ holds, and the k-signal assumes its high level. At the next following negative edge of the g-signal the UDC counter is advanced and signal *j* changes to the value of 0 since a full period of the Meander-structure has been passed. At the same time a pulse is generated on the carry output of UDC which is indicated by the signal *m*.

The m-signal is supplied to the micro processor as an interrupt instruction initiating the micro processor to sense the signal *j* and to conclude therefrom the direction of the zero crossing by checking if the new position of UDC has the value of 0 or 127 and dependent thereon count up or down a stored value for the number of zero crossings.

As described above an accurate value of the carriage position is accessible for the micro processor at each moment by signals *j* and *m*. In a matrix-printer this information is used for the initiation of relevant printing needles.

Settling of the carriage position at the two occasions according to the invention is made in control of the micro processor program, and then the first occasion appears after the acceleration distance of the carriage, which is known by the characteristic of the drive motor.

At the first occasion the carriage position is sensed as described above and at the same time a counter comprised in the micro processor is started, said counter being thereafter advanced by the timing circuit TC thereof. In order to obtain a secure indication of the carriage position the position is sensed repeatedly and accepted first after reading of two equal values in succession. When the counter cycle has been run through the second occasion occurs and the carriage position is again sensed in the same manner. The distance of movement is calculated as the difference between the recognized carriage positions and with a knowledge of the cycle time of the counter an actual value of the carriage speed is calculated which is thereafter compared with a stored optimal value. Based on this comparison is thereafter calculated a correction factor of the reference signal Ref (Fig. 1) and a compensated Ref-signal is generated said signal being supplied to the drive unit 10 via the D/A converter 11 during the next following carriage movement.

During the next following carriage movement a corresponding calculation of the actual carriage speed is made and dependent thereon is again calculated an eventually changed reference value. The operation is repeated in the described manner during each following carriage movement.

Above has been described a method and device for checking and eventually updating a carriage speed reference signal once per carriage movement. However, as should be obvious to anyone skilled in the art, the carriage speed may be sensed repeatedly during the carriage movement and corresponding reference signal values may be calculated and supplied to the drive unit, provided that a high speed micro processor is available.

## Claims

1. A device for indicating the position of a printer carriage (57) by means of a so called Meander-indicator (1, 2, 3), said carriage being movable by means of a direct current motor (6) at a speed which corresponds to a digital speed reference signal (Ref) supplied by a microprocessor (12) to the motor via a D/A-converter (11) and a driver unit (10), characterized in that said Meander-indicator comprises one stationary element (1) being extended along the full printing width and two further elements (2, 3) arranged on the carriage with a mutual displacement of 1/4 period of the loop structure of the Meander-indicator relative to the stationary element, said further elements being supplied with a sinus and a cosinus signal of same frequency by a sinus (SIN) and a cosinus (COS) generator, respectively, said signals generating in the stationary Meander-element an output signal (e) of same frequency and showing relative to the supplied sinus signal a phase deviation ($\beta$) which is measure of the carriage position within a period of the Meander-loop structure, and for digitalizing this phase deviation ($\beta$) further comprising a binary counter (DC) having a cycle length of A bits, and which is advanced at a frequency (a) equal to $2^A$ times the frequency of the sinus signal and in synchronism therewith, generating thereby an output binary number of A bits which varies stepwise from 0 to $2^A$ during each period of the Meander output signal (e), a latch circuit (7BL) to which said output number is supplied, a converter (C) for converting the Meander output signal (e) to a rectangular wave (e') with frequency and phase unchanged, and a flip-flop circuit (FF) to the input of which said rectangular wave (e') is supplied and which is clocked by the input frequency (a) of the binary counter (DC), and in which said latch circuit is clocked by the output signal of the flip-flop circuit, the latch circuit supplying thereby a binary representation of said phase deviation ($\beta$).

2. A device as claimed in claim 1, characterized in that for the suppresion of interferences in the carriage position indication supplied by said latch circuit (7BL) the device comprises circuit, which consists of an adder (SUB) of which one input is inverted, and an up/down counter (UDC) having the cycle length of A bits and made to operate with a predetermined lag relative to the latch circuit, in which the output signals from the latch circuit and the up/down counter are supplied to the +input and −input, respectively, of said adder (SUB) comparing thereby said output signals, and in which, provided said comparison indicates that the lag is greater than the predetermined amount, the up/down counter is advanced one step in synchronism with the pulse shaped output signal from said flip-flop circuit (FF), thereby allowing the up/down counter to provide an undistorted, digital carriage position indication.

3. A use of a device for indicating the position of a printer carriage by means of a so called Meander-indicator, said carriage being movable by means of a direct current motor at a speed which corresponds to a digital speed reference signal supplied by a microprocessor to the motor via a D/A-converter and a drive unit as claimed in claim 1 or 2 for controlling the speed of the printer carriage so as to correspond to an optimal carriage speed which is stored in said microprocessor, characterized in that the position of the carriage, after it has reached the constant speed which corresponds to the reference signal (Ref), is sensed at two occasions determined by a timing circuit (TC) which is included in the microprocessor, that an actual speed value is calculated based on the distance between the sensed positions and the time length between said occasions, that this calculated speed value is compared with the stored optimal speed value, and that, in case the actual speed is not correspondence with the optimal speed, a compensated reference signal is calculated in order to be supplied to the drive unit during a following carriage movement.

### Patentansprüche

1. Vorrichtung zur Positionsanzeige eines Druckerwagens (57) mit Hilfe eines sog. Mäanderanzeigers (1, 2, 3), bei der der Wagen von einem Gleichstrommotor (6) mit einer Geschwindigkeit verschoben wird, die einem digitalen, von einem Mikroprozessor (12) dem Motor über einen D/A-Wandler (11) und eine Antriebseinheit (10) zugeführten Geschwindigkeitsreferenzsignal (Ref) entspricht, dadurch gekennzeichnet, dass der Mäanderanzeiger ein einziges stationäres Mäanderelement (1), das sich über die volle Schreibbreite erstreckt, und zwei weitere Elemente (2, 3) auf dem Wagen mit einer gegenseitigen Verschiebung von einer Viertelperiode der Schleifenstruktur des Mäanderanzeigers in bezug auf das stationäre Mäanderelement (1) enthält, wobei die weiteren Elemente (2, 3) mit einem Sinus- und einem Cosinussignal gleicher Frequenz aus einem Sinus (SIN) bzw. einem Cosinus-Generator (COS) beliefert werden, dass diese Signale (SIN, COS) im stationären Mäanderelement (1) ein Ausgangssignal (e) der selben Frequenz erzeugen, das in bezug auf das gelieferte Sinussignal eine Phasenverschiebung ($\beta$) aufweist, die ein Mass für die Wagenverschiebung innerhalb einer Periode der Mäanderschleifenstruktur ist, und der Anzeiger zum Digitalisieren dieser Phasenverschiebung ($\beta$) weiter einen Binärzähler (DC) mit einer Zykluslänge von A Bits, der mit einer Frequenz (a) gleich dem 2A-Fachen der Frequenz des Synchronsignals und synchron mit diesem Signal arbeitet, wobei er eine Ausgangs-Binärzahl von A Bits erzeugt, die stufenweise von 0 bis 2A in jeder Periode des Mäander-Ausgangssignals (e) variiert, sowie eine Sperrschaltung (7BL), an die die Ausgangszahl gelegt wird, einen Wandler (C) zum Umsetzen des Mäander-Ausgangssignals (e) in einen Rechtekimpuls (e') mit unveränderter Frequenz und Phase, und eine Flipflopschaltung (FF) enthält, an deren Eingang der Rechteckimpuls (e') angelegt wird, der von der Eigangsfrequenz (a) des Binärzählers (DC) getaktet wird, wobei die Sperrschaltung vom Ausgangssignal der Flipflopschaltung getaktet wird und gleichzeitig eine binäre Wiedergabe der Phasenverschiebung ($\beta$) liefert.

2. Vorrichtung nach Anspruch 1, dadurch gekennzeichnet, dass zum Unterdrücken von Störungen in der von der Sperrschaltung (7BL) gelieferten Wagenpositionsanzeige die Vorrichtung eine Schaltung enthält, die aus einem Addierer (SUB) mit einem invertierten Eingang und einem Vorwärts/Rückwärts-Zähler (UDC) mit einer Zykluslänge von A Bits besteht, der mit einer vorgegebenen Verzögerung in bezug auf die Sperrschaltung arbeitet, wobei die Ausgangssignale aus der Sperrschaltung und dem Vorwärts/Rückwärts-Zähler dem Pluseingang bzw. dem Minuseingang des Addierer (SUB) zugeführt werden, wobei diese Ausgangssignale verglichen werden und, wenn das Ergebnis des Vergleichs angibt, dass die Verzögerung grösser als der vorgegebene Betrag ist, der Vorwärts/Rückwärts-Zähler synchron mit dem impulsförmigen Ausgangssignal aus der Flipflopschaltung (FF) um einen Schritt weitergeschoben wird, wobei der Vorwärts/Rückwärts-Zähler eine unverzerrte, digitale Wagenpositionsanzeige liefern kann.

3. Anwendungsmöglichkeit für eine Vorrichtung zum Anzeigen der Position eines Druckerwagens mit Hilfe eines sog. Mäanderanzeigers, bei der der Wagen von einem Gleichstrommotor bei einer Geschwindigkeit verschoben wird, die einem digitalen, von einem Mikroprozessor dem Motor über einen D/A-Wandler und eine Antriebseinheit nach Anspruch 1 oder 2 zugeführten Geschwindigkeitsreferenzsignal zur Steuerung der Geschwindigkeit des Druckerwagens entspricht, um eine optimale, im Mikroprozessor gespeicherte Wagengeschwindigkeit zu erreichen, dadurch gekennzeichnet, dass die Wagenposition nach dem Erreichen der konstanten, dem Referenzsignal (Ref) entsprechenden Geschwindigkeit zu zwei, von einem Zeitgeber (TC) bestimmten Zeitpunkten abgetastet wird, welcher Zeitgeber in dem Mikroprozessor enthalten ist, dass die Berechnung eines vorliegenden Geschwindigkeitsbetrags auf dem Abstand zwischen den abgetasteten Positionen und auf der Dauer zwischen den beiden Zeitpunkten basiert, dass dieser berechnete Geschwindigkeitsbetrag mit dem gespeicherten optimalen Geschwindigkeitsbetrag verglichen wird und dass, wenn die vorliegende Geschwindigkeit der optimalen Geschindigkeit nicht entspricht, ein ausgleichendes Referenzsignal berechnet wird, das der Antriebseinheit bei einer folgenden Wagenvershiebung zugeführt wird.

**Revendications**

1. Dispositif permettant d'indiquer la position d'un chariot d'imprimante (57) à l'aide d'un indicateur dit de méandre (1, 2, 3), ledit chariot pouvant être déplacé à l'aide d'un moteur à courant continu (6); à une vitesse qui correspond au signal de référence de vitesse numérique appliqué par un microprocesseur (12) au moteur par l'intermédiaire d'un convertisseur numérique analogique (11) et d'une unité d'entraînement (10), caractérisé en ce que l'indicateur dit de méandre comporte un élément stationnaire (1) s'étendant sur toute la largeur d'impression et deux autres éléments (2, 3), prévus sur le chariot avec un déplacement mutuel de 1/4 péiode de la structure à boucle de l'indicateur de méandre par rapport à l'élément stationnaire, lesdites autres éléments recevant un signal sinusoïdal et un signal cosinusoïdal de même fréquence provenant d'un générateur de signaux sinusoïdaux et cosinuoïdaux respectivement, lesdits signaux formant, dans l'élément de méandre stationnaire, un signal de sortie de la même fréquence et présentant par rapport au signal sinusoïdal appliqué un déphasage ($\beta$) qui constitue une mesure pour la position du chariot dans une période de la structure à boucle en forme de méandre, et pour la numérisation de ce déphasage ($\beta$), un compteur binaire présentant une longuer de cycle de A bits, et qui est avancé à une fréquence égale à A fois la fréquence du signal sinusoïdal et en synchronisation avec ce signal, formant ainsi un nombre binaire de sortie de 2A bits, qui varie pas à pas à partir de 0 à $2^A$ pendant chaque période du signal de sortie en forme de méandre un circuit de verrouillage (7BL), auquel est amené ledit nombre de sortie, un convertisseur (C) servant à convertir le signal de sortie en forme de méandre (e) en une onde rectangulaire (e') à fréquence et phase invariable, et un circuit basculeur (FF), à l'entrée duquel est amenée ladite onde rectangulaire (e') et qui est commandée par la fréquence d'entrée (a) du compteur binaire (DC), et dans lequel ledit circuit de verrouillage est commandé par le signal d'entrée du circuit basculeur, le circuit de verrouillage fournissant une représentation binaire dudit déphasage ($\beta$).

2. Dispositif selon la revendication 1, caractérisé en ce que pour la suppression d'interférences dans l'indication de position de chariot amenée par ledit circuit de verrouillage (7BL), le dispositif comporte un circuit qui est constitué par un additionneur (SUB), dont une entrée est inversée, et un additionneur/soustractue (UDC) présentant la longueur de cycle de A bits et conçu pour fonctionner avec un retard prédéterminé par rapport au circuit de verrouillage, dans lequel les signaux de sortie provenant du circuit de verrouillage et du compteur additionneur sont amenés à l'entrée+et à l'entrée—respectivement, dudit additionneur (SUB), comparant ainsi lesdits signaux de sortie, et dans lequel ladite comparaison indique que le retard dépasse un montant prédéterminé, l'additionneur/soustracteur est avencé d'un pas en synchronisme avec le signal de sortie en forme d'impulsion provenant du circuit basculeur (FF), permettant ainsi à l'additionneur/soustracteur de fournier une indication non déformée numérique de la position du chariot.

3. L'utilisation d'un dispositif pour l'indication de la position d'un chariot d'imprimante à l'aide d'un indicateur dit de méandre, ledit chariot pouvant être déplacé à l'aide d'un moteur à courant continu à une vitesse qui correspond au signal de référence de vitesse numérique fourni par un microprocesseur au moteur par l'intermédiaire d'un convertisseur numérique-analogique et d'une unité d'entraînement selon la revendication 1 ou 2, pour la commande de la vitesse d'un chariot imprimante de façon à correspondre à une vitesse optimale du chariot qui est emmagasinée dans ledit microprocesseur, caractérisé en ce qu'après avoir atteint la vitesse constante correspondant au signal de référence (Ref), la position du chariot est explorée à deux moments déterminés par un circuit de réglage de temps (TC) contenu dans le microprocesseur, que la valeur réelle de la vitesse est calculée en fonction de la distance entre les positions explorées et la longueur de temps entre lesdites moments, que cette valeur de vitesse calculée est comparée avec la valeur de vitesse optimale emmagasinée et que dans le cas où la vitesse réelle ne correspond pas à la vitesse optimale, un signal de référence est compensé et calculé afin d'être amené à l'unité d'entraînement pendant le déplacement suivant du chariot.

FIG.1

0 009 291

FIG.2

FIG.3